# EUROPEAN PATENT SPECIFICATION

(11) **EP 3 707 458 B1**
(45) Date of publication and mention of the grant of the patent: **01.01.2025**
(21) Application number: 18876252.0
(22) Date of filing: 09.11.2018
(51) Int. Cl.: F41G 1/38, F41G 1/473, F41G 3/08, G02B 27/32

(54) **APPARATUS FOR CALCULATING AIMING POINT INFORMATION**
VORRICHTUNG ZUR BERECHNUNG VON ZIELPUNKTINFORMATIONEN
APPAREIL DE CALCUL D'INFORMATIONS DE POINT DE VISÉE

(30) Priority: 10.11.2017 US 201762584508 P
(43) Date of publication of application: 16.09.2020
(73) Proprietor: Sheltered Wings, Inc. D/b/a/ Vortex Optics, Barneveld, WI 53507 (US)
(72) Inventor: MORELL, Rob, Barneveld, WI 53507 (US)
(74) Representative: Barker Brettell LLP
(86) International application number: PCT/US2018/059946
(87) International publication number: WO 2019/094671

(56) References cited:
- US-A1- 2014 123 534
- US-A1- 2015 020 431
- US-A1- 2015 020 431
- US-A1- 2016 252 324
- US-A1- 2016 252 324

## Description

### FIELD

The disclosure relates to target acquisition and related devices, and more particularly to telescopic gunsights and associated equipment used to achieve shooting accuracy at, for example, close ranges, medium ranges and extreme ranges at stationary and moving targets. In the present disclosure the following conversions are used: 1 yard = 0.9144 meter, and 1 inch = 25.4 mm.

### BACKGROUND

All shooters, whether they are police officers, soldiers, Olympic shooters, sportswomen and sportsmen, hunters, or weekend enthusiasts have one common goal: hitting their target accurately and consistently. Accuracy and consistency in shooting depend largely on the skill of the shooter and the construction of the firearm and projectile.

The accuracy of a firearm can be enhanced by the use of precisely-made components, including precisely-made ammunition, firearm components and target acquisition devices. It is well known in shooting that using ammunition in which the propellant weight and type, bullet weight and dimensions, and cartridge dimensions are held within very strict limits, can improve accuracy in shooting.

At very long ranges, in excess of 500 yards, however, the skill of the shooter and the consistency of the ammunition is often not enough to insure that the shooter will hit the target. As range increases, other factors can affect the flight of the bullet and the point of impact down range. One of these factors is "bullet drop". "Bullet drop" is caused by the influence of gravity on the moving bullet, and is characterized by a bullet path which curves toward earth over long ranges. Therefore to hit a target at long range, it is necessary to elevate the barrel of the weapon, and the aiming point, to adjust for bullet drop.

Other factors, such as wind, Magnus effect (i.e., a lateral thrust exerted by wind on a rotating bullet whose axis is perpendicular to the wind direction), projectile design, projectile spin, Coriolis effect, and the idiosyncrasies of the weapon or projectile can change the projectile's path over long range. Such effects are generally referred to as "windage" effects. Therefore, for example, to hit a target at long range, it may be necessary to correct for windage by moving the barrel of the weapon slightly to the left or the right to compensate for windage effects. When shooting East and West the elevation will be effected. Shooting due east, the bullet impact will be high. Shooting due west, the bullet impact will be low. The elevation at extended range might change slightly up or down depending on the spin of the projectile in a right hand or left hand twist barrel. Thus, for example, in order to hit a target at long range, the shooter must see the target, accurately estimate the range to the target, estimate the effect of bullet drop and windage effects on the projectile, and use this information to properly position the barrel of the firearm prior to squeezing the trigger.

In addition, conventional telescopic target acquisition devices are not generally useful at long ranges in excess of 400-800 yards. At close ranges less than 100 yards conventional target acquisition devices generally fall short when extreme accuracy is desired. The cross-hairs of such target acquisition devices are typically located in the center of the field, with the vertical hair providing a central indicator for making a windage adjustment, and the horizontal hair providing a central indicator for making a bullet drop adjustment. Modifications to this basic system have not, thus far, enabled a skilled shooter firing at long ranges to acquire and hit a target quickly and reliably, regardless of the weapon used (assuming always that the firearm is capable of reaching a target at the desired long range).

For example, U.S. Pat. No. 1,190,121 to Critchett, discloses a reticle for use in a rifle scope containing a rangefinder having markings for finding a range with reference to the height of a man. Apparently because of the innate variation in the height of any given individual from that used to produce the reticle, and the resulting inaccuracy which that would produce at long ranges, Critchett's scope was only useful to 600 yards.

U.S. Pat. No. 3,948,587 to Rubbert discloses a reticle and telescope gunsight system having primary cross-hairs which intersect conventionally at the center of the field, and secondary horizontal cross-hairs spaced apart by different amounts to form a rangefinder and distinct aiming apertures and points, based upon a predetermined, estimated size of a target. Rubbert's preferred embodiment is constructed for use in shooting deer having an 18" chest depth. However, like Critchett, the usefulness of Rubbert for shooting other targets of varying size at long range is doubtful.

U.S. Pat. No. 3,492,733 to Leatherwood discloses a variable power scope having aiming cross-hairs and two upper cross-hairs for bracketing a target of known dimensions at a known distance. The scope is mounted to a gun barrel, and the position of the scope in relation to the gun barrel is adjustable up and down to compensate for bullet drop by covering the target with the bracketing cross-hairs, and rotating an adjustment ring to expand or contract the bracketing cross-hairs to bracket the target. Leatherwood's scope, like the others discussed above, has limited utility at long ranges because it is designed with a specific size target in mind, and would there-fore be inaccurate when used with targets of widely varying size, and also because at long range the scope may not be able to move sufficiently in relation to the barrel (i.e., may be obstructed by the gun barrel).

U.S. Pat. No. 4,403,421 to Shepherd discloses a scope having a primary and secondary reticles, the secondary reticle being a polygonal reticle with different indicia on the different faces which can be rotated into position to compensate for bullet drop and determining target range for different sized targets. However, having to rotate a secondary reticle to locate an appropriate target shape in order to determine the range is time consuming and undesirable, since it takes the shooter's attention away from the target.

It should be noted that the range finding inaccuracies inherent in these prior art references may be resolved using a laser rangefinder or highly accurate optical rangefinder. However, since a laser rangefinder emits light, there is always the possibility that the beam from a laser rangefinder could be detected by an individual with special equipment, revealing the position of the shooter, causing a live target to move, or other undesirable consequences for the rifleman using the laser before the shot can be taken. Furthermore, a laser rangefinder includes complex electronics that must be handled with care. Laser rangefinders require a reflective target to achieve consistently accurate range. Finally, a laser rangefinder must be powered with electricity from a source that must be carried by the shooter. The additional weight is a burden, and the possibility exists that power source could fail or become exhausted through use, causing the rangefinder to cease working.

Accordingly, the need exists for a target acquisition device having a reticle which includes, for example, an optical rangefinder which permits a skilled shooter to rapidly and accurately identify the range to any target of known or estimable size, no matter how large or small, to make fast and accurate adjustment for projectile drop and windage, using the shooter's knowledge and experience and without the need to move rings or make adjustments (i.e., through the elevation and windage knobs) to the target acquisition device, thus enabling the shooter to accurately hit targets at any range, depending upon the gun handling skills and eyesight of the shooter, and the maximum range of the selected firearm, and the selected ammunition. The shooter never has to take her or his eye off the target acquisition device from the time the shooter spots the target and determines range, using the proper grid line to accurately engage and hit the target. Reticles of the present invention allow the rifle to be zeroed, for example, at 100 yards, or 100 meters, or more, and yet be able to engage targets very accurately as close as 20 yards.
US2015020431 A1 describes telescopic gunsights and associated equipment used to achieve shooting accuracy at, for example, close ranges, medium ranges and extreme ranges at stationary and moving targets.
US2016252324 A1 describes a ballistic effect compensating reticle and aim compensation method for rifle sights or projectile weapon aiming systems which include a multiple point elevation and windage aim point field including a primary aiming mark indicating a primary aiming point adapted to be sighted-in at a first selected range and a plurality of secondary aiming points arrayed beneath the primary aiming mark. The method for compensating for a projectile's ballistic behavior while developing a field expedient firing solution permits the shooter to express the field expedient firing solution in units of distance and velocity.

### SUMMARY

According to a first aspect of the invention, there is provided a reticle in accordance with claim 1. Optional and/or preferable features are set out in the dependent claims.

Other embodiments will be evident from a consideration of the drawings taken together with the detailed description provided below.

### BRIEF DESCRIPTION OF THE DRAWINGS

FIG. 1 is a diagram showing the optical components of a telescopic gunsight of the present invention;
FIG. 2 is a partial side view of an example of a firearm showing a telescopic gunsight mounted on the barrel;
FIG. 3 is a front view of a first embodiment of a reticle in accordance with embodiments of the present disclosure;
FIG. 4 is a magnified front view of the center portion of the reticle of FIG. 3;
FIG. 5 a front view of a second embodiment of a reticle in accordance with embodiments of the present disclosure;
FIG. 6 is a magnified front view of the center portion of the reticle of FIG. 5.

### DETAILED DESCRIPTION

The disclosure relates to target acquisition and related devices, and more particularly to telescopic gunsights and associated equipment used to achieve shooting accuracy at, for example, close ranges, medium ranges and extreme ranges at stationary and moving targets. Certain preferred and illustrative embodiments of the invention are described below. The present invention is not limited to these embodiments.

As used herein, "ballistics" is a way to precisely calculate the trajectory of a bullet based on a host of factors.

As used herein, the term "firearm" refers to any device that propels an object or projectile, for example, in a controllable flat fire, line of sight, or line of departure, for example, hand-guns, pistols, rifles, shotgun slug guns, muzzleloader rifles, single shot rifles, semiautomatic rifles and fully automatic rifles of any caliber direction through any media. As used herein, the term "firearm" also refers to a remote, servo-controlled firearm wherein the firearm has auto-sensing of both position and directional barrel orientation. The shooter is able to position the firearm in one location, and move to a second location for target image acquisition and aiming. As used herein, the term "firearm" also refers to chain guns, belt-feed guns, machine guns, and Gattling guns. As used herein, the term firearm also refers to high elevation, and over-the-horizon, projectile propulsion devices, for example, artillery, mortars, canons, tank canons or rail guns of any caliber.

As used herein, a "hologram" is a three-dimensional image formed by the interference of light beams from a laser or other coherent light source.

As used herein, a "reticle," in one embodiment, is a crosshair aiming point for your bullet. In another embodiment, a "reticle" is an aiming pattern for your bullet.

As used herein, "trajectory" is a bullet flight path over distance that is affected by gravity, air density, bullet shape, bullet weight, muzzle velocity, barrel twist direction, barrel twist rate, true bearing of flight path, vertical angle of muzzle, wind, and a number of other factors.

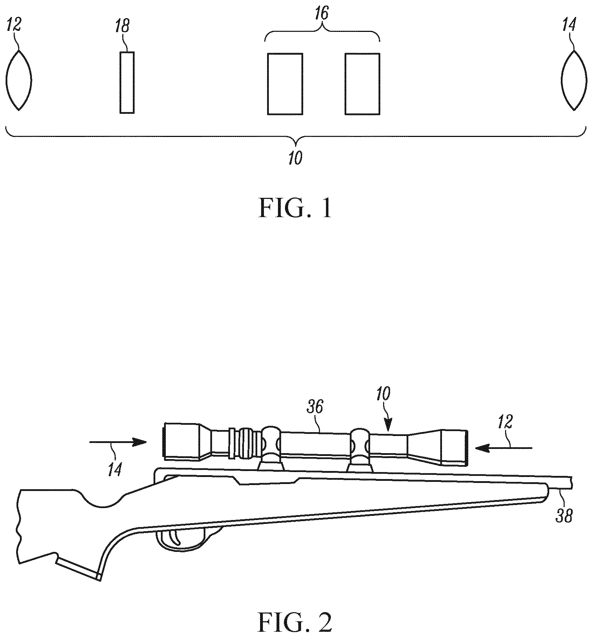

As exemplified in FIGS. 1 and 2, a telescopic gunsight 10 (also referred to herein as a "scope") includes a housing 36 that can be mounted in fixed relationship with a gun barrel 38. Housing 36 is preferably constructed from steel or aluminum, but can be constructed from virtually any durable, substantially rigid material that is useful for constructing optical equipment. Mounted in housing 36 at one end is an objective lens or lens assembly 12. Mounted in housing 38 at the opposite end is an ocular lens or lens assembly 14.

As used herein, the term "lens" refers to an object by means of which light rays, thermal, sonar, infrared, ultraviolet, microwave or radiation of other wavelength is focused or otherwise projected to form an image. It is well known in the art to make lenses from either a single piece of glass or other optical material (such as transparent plastic) which has been conventionally ground and polished to focus light, or from two or more pieces of such material mounted together, for example, with optically transparent adhesive and the like to focus light. Accordingly, the term "lens" as used herein is intended to cover a lens constructed from a single piece of optical glass or other material, or multiple pieces of optical glass or other material (for example, an achromatic lens), or from more than one piece mounted together to focus light, or from other material capable of focusing light. Any lens technology now known or later developed finds use with the present invention. For example, any lens based on digital, hydrostatic, ionic, electronic, magnetic energy fields, component, composite, plasma, adoptive lens, or other related technologies may be used. Additionally, moveable or adjustable lenses may be used. As will be understood by one having skill in the art, when the scope 10 is mounted to, for example, a gun, rifle or weapon 38, the objective lens (that is, the lens furthest from the shooter's eye) 12 faces the target, and the ocular lens (that is, the lens closest to the shooter's eye) 14 faces the shooter's eye.

Other optical components that may be included in housing 36 include variable power optical components 16 for a variable power scope. Such components 16 typically include magnifiers and erectors. Such a variable power scope permits the user to select a desired power within a predetermined range of powers. For example, with a 312x 50 scope, the user can select a lower power (e.g., 3x50) or a high power (e.g., 12x50) or any power along the continuous spectrum.

Finally, a reticle assists the shooter in hitting the target. The reticle is typically (but not necessarily) constructed using optical material, such as optical glass or plastic, or similar transparent material, and takes the form of a disc or wafer with substantially parallel sides. The reticle may, for example, be constructed from wire, spider web, nano-wires, an etching, or may be analog or digitally printed, or may be projected (for example, on a surface) by, for example, a mirror, video, holographic projection, or other suitable means on one or more wafers of material. In one embodiment, illuminated reticles are etched, with the etching filled in with a reflective material, for example, titanium oxide, that illuminates when a light or diode powered by, for example, a battery, chemical or photovoltaic source, is rheostatically switched on compensating for increasing (+) or decreasing (-) light intensity. In a further embodiment, the illuminated reticle is composed of two or more wafers, each with a different image, for example, one image for daylight viewing (that is, a primary reticle), and one image for night viewing (that is, a secondary reticle). In a still further embodiment, if the shooter finds it undesirable to illuminate an entire reticle, since it might compromise optical night vision, the secondary reticle illuminates a reduced number of dots or lines. In yet another embodiment, the illuminated primary and secondary reticles are provided in any color. In a preferred embodiment, the illuminated reticle of the shooter's aiming device is identical to one or more spotter target acquisition devices such that the spotting device independently illuminates one or both of the reticles.

In a particularly preferred embodiment, illuminated reticles are used in, for example, low light or no light environments using rheostat-equipped, stereoscopic adaptive binoculars. With one eye, the shooter looks through a target acquisition device equipped with an aiming reticle of the present invention. With the opposite eye, the shooter observes the target using a night vision device, for example, the PVS 14 device. When the reticle and night vision device of the binocular are rheostatically illuminated, and the binocular images are properly aligned, the reticle of the target acquisition device is superimposed within the shooter's field of vision upon the shooter's image of the target, such that accurate shot placement can be made at any range in low light or no light surroundings.

In some embodiments, the reticle is a thick or thin line-weight reticle. In another embodiment, the reticle of the ballistics calculator system of the present invention is a conventional reticle, for example, a standard duplex or universal Mil-Dot reticle.

In one embodiment, the reticle is a hologram.

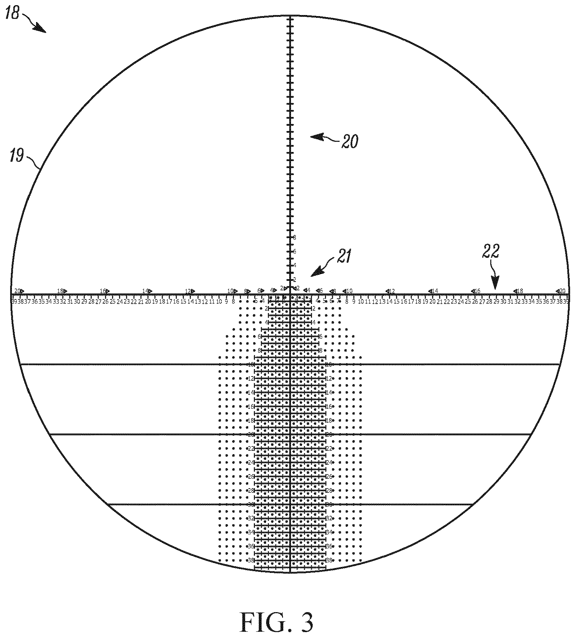

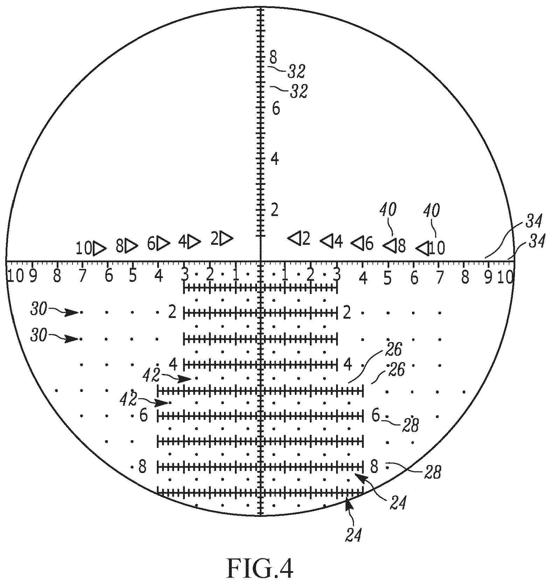

In a fixed power scope, the reticle is mounted anywhere between the ocular lens 14 and the objective lens 12 of FIG. 1. In a variable power scope, the reticle is mounted between the objective lens 12 and the optical components 16. In this position, the apparent size of the reticle when viewed through the ocular lens will vary with the power; for example, compare FIG. 4 (high power) with FIG. 3 (low power). The present reticle may be mounted in a variable power target acquisition device, for example a variable power telescopic gunsight such as those manufactured by Sheltered Wings, d/ba/ Vortex Optics because of their excellent optics. The variable power scope may magnify over any suitable range and objective lens diameter, for example a 3-12x50, a 4-16x50, a 1.8-10x40, 3.2-17x 44, 4-22x58 telescopic gunsight, *etc.*

When the reticle is mounted between the objective lens and the variable power optical components 16, the selected aiming point (as described in more detail below) on the reticle disclosed herein does not vary as the shooter zooms the scope in and out to find the most desirable power for a particular shot. The reticle disclosed herein is thus in the first focal plane so that the reticle markings scales are proportional to the image when viewed through the scope. Thus, a unit of measure is consistent no matter the magnification. In one embodiment, since magnification is proportional on a linear scale through the power range, when the reticle is in the second plane (that is, the markings stay the same size visually against a growing or shrinking image when the power changes (i.e., because the relationship is linear)), and when the power to which the scope is set is known, the scale value against the image at a known distance when seen through the scope is calculated. In a further embodiment, a "click" stop at fixed intervals on the power ring assists the user's ability to set the power at a known stop.

As shown in the Figures, the reticle 18 is formed from a substantially flat disc or wafer 19 formed from substantially transparent optical glass or other material suitable for manufacturing optical lenses. Disc 19 has two, substantially parallel, sides. A primary vertical cross-hair 20 is provided on one side of said disc 19 using conventional methods such as, for example, etching, printing, engraved by machine or burned by laser, holographic technology, or applying hairs or wires of known diameter. In one embodiment, etching is used. Primary vertical cross-hair 20 preferably bisects the disc 19 and intersects the optical center 21 of reticle 18. A primary horizontal cross-hair 22 is also provided, and most preferably intersects the primary vertical cross-hair. In some embodiments, the primary horizontal cross-hair 22 intersects the primary vertical cross-hair 20 at, or substantially at, the optical center 21. In other embodiments, the primary horizontal cross-hair 22 intersects the primary vertical cross-hair 20 at a position well above the optical center 21, so as, for example, to provide additional field of view to shoot accurately at long ranges without reducing the magnifying power of the scope. In either instance, the primary vertical cross-hair 20 and the primary horizontal cross-hair 22 form four sectors: an upper right sector (*e.g.,* quadrant), an upper left sector, a lower left sector, and a lower right sector, when viewed through a scope properly mounted to a gun barrel as shown in FIG. 2.

In the embodiments shown in FIGS. 3-6, the primary horizontal cross-hair 22 and primary vertical cross-hair 20 are lines, and more particularly straight lines. Moreover, as shown in FIGS. 3-6, the primary vertical cross-hair 20 and primary horizontal cross-hair 22 do not physically intersect. Rather, the primary horizontal cross-hair 22 and primary vertical cross-hair 20 are not continuous.

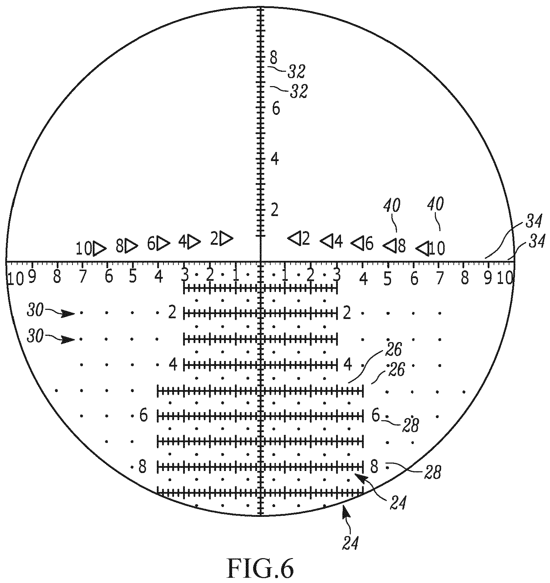

A plurality of secondary horizontal cross-hairs 24 are provided along the primary vertical cross-hair 20. In an embodiment, the secondary horizontal cross-hairs 24 are disposed below the primary horizontal cross-hair 22. In another embodiment, the secondary horizontal cross-hairs 24 are disposed both above and below the primary horizontal cross-hair 22. In one embodiment, the secondary horizontal crosshairs 24 are evenly spaced. Some of these secondary horizontal cross-hairs 24 are provided with unique symbols 28 that are useful in quickly locating a particular horizontal cross-hair. Symbols 28 can be numbers, as shown in FIGS. 4 and 6, letters or other symbols. Symbols 28 are used for identification purposes only. In one embodiment, at least some of the secondary, horizontal cross-hairs are evenly spaced. In a further embodiment, at least some of the secondary horizontal crosshairs are unevenly spaced.

A plurality of vertical hash-marks 26 are provided on at least some of the secondary horizontal cross-hairs 24. The vertical hash-marks 26 aid the shooter in making adjustments for windage and for locating an appropriate aiming point on the reticle with respect to both windage and range. In one embodiment the at least some of the vertical hash-marks 26 are evenly spaced. In a further embodiment, the at least some of the vertical hash-marks 26 are unevenly spaced.

In an embodiment, at least some of the secondary horizontal cross-hairs 24 also include a line of dots or hash-marks 30 that extend the length of the secondary horizontal cross-hairs 24. In an embodiment, at least some of the dots or hash-marks 30 are evenly spaced on both sides of the secondary horizontal cross-hairs 24, as shown in FIGS. 4 and 6. However, in other embodiments, at least some of the dots or hash-marks 30 may be unevenly spaced. In further embodiments, the dots or hash-marks 30 may extend only from one end of the secondary horizontal cross-hairs 24.

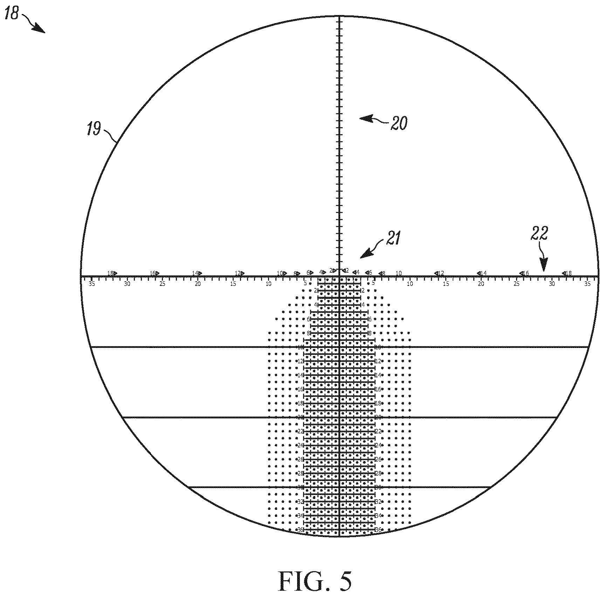

In an embodiment, the secondary horizontal cross-hairs 24, with and/or without the extending dots or hash-marks 30, are arranged in a "Christmas tree" fashion, with the secondary horizontal cross-hairs 24 (with and/or without the extending dots or hash-marks 30) being shorter near the primary horizontal cross-hair 22 and increasing in length away, *e.g.,* below, the primary horizontal cross-hair 22. In some embodiments, such as shown in FIGS. 3 and 5, the length of the secondary horizontal cross-hairs 24 (with and/or without the extending dots or hash-marks 30) increases until a given length is reached, with remaining secondary horizontal cross-hairs 24 (with and/or without the extending dots or hash-marks 30) having the same greatest length.

While in the embodiments shown, secondary horizontal cross-hairs intersect the primary vertical cross-hair 20 only below the primary horizontal cross-hair 22, in other embodiments, secondary horizontal cross-hairs may be present above the primary horizontal cross-hair 22 as well. In other embodiments, and as shown in FIGS. 3-6, the primary vertical cross-hair 20 is intersected by a plurality of horizontal hash-marks 32 above the primary horizontal cross-hair 22.

In an embodiment, a plurality of vertical hash-marks 34 are provided on the primary horizontal cross-hair 22. The vertical hash-marks 34 aid the shooter in making adjustments for windage and for locating an appropriate aiming point on the reticle with respect to both windage and range. In one embodiment the at least some of the vertical hash-marks 34 are evenly spaced. In a further embodiment, the at least some of the vertical hash-marks 34 are unevenly spaced.

In one embodiment, such as shown in FIGS. 4 and 6, the reticle comprises primary and secondary horizontal cross-hairs of unequal length, *e.g.,* in a "Christmas tree" style arrangement. In other embodiments, the reticle comprises secondary horizontal cross-hairs of equal length of use, for example, in tactical, military, and police applications in targeting a moving object. In some embodiments, the reticle comprises a central aiming point marked, for example, by a cross or solid aiming dot suitable for use, for example, in tactical, military, and police applications in targeting a moving object. In other embodiments, such as in FIGS. 4 and 6, no central aiming point is marked. In further embodiments, the reticle comprises markings for identification of cross-hairs comprising numbers located, for example, at the end of at least one horizontal cross-hair, between at least two horizontal cross-hairs, along at least one horizontal cross-hair, or numbers alternating with geometric figures, for example, dots. As exemplified in FIGS. 4 and 6, in one embodiment, the reticle comprises horizontal cross-hairs of unequal length, identification marks (symbols) of unequal size at the ends of the secondary horizontal cross-hairs and along the primary horizontal cross-hair, and no aiming dot.

In some embodiments, reticles disclosed herein comprise cross-hairs that are of a predetermined thickness, for example a single thickness, a thickness increasing along the length of the cross-hair, or a thickness decreasing along the length of the cross-hair. In some embodiments, a reticle of the present disclosure comprises cross-hairs of single unequal thicknesses. In other embodiments, a reticle of the present disclosure comprises cross-hairs that vary in thickness along their length in steps. In still other embodiments, reticles of the present disclosure comprise solid cross-hairs of varying thickness. In further embodiments, some reticles of the present disclosure comprise hollow cross-hairs of varying thickness.

In some embodiments, reticles of the present disclosure also provide markings above the primary horizontal cross-hair 22. In one embodiment, the marking are rangefinder markings, and moving feature markings 40. Such rangefinder markings/moving feature markings 40 are suitable for use, for example, in tactical, military, police and sporting applications. In the embodiment shown, the rangefinder markings/moving feature markings 40 are disposed on both sides of the primary vertical cross-hair 20; however, in other embodiments, rangefinder markings/moving feature markings 40 may be provided on just one side of the primary vertical cross-hair 20.

In an embodiment, the reticle includes at least two polygonal rangefinder markings/moving feature markings 40 in at least one quadrant of the reticle. In yet another embodiment, the reticle includes at least two polygonal rangefinder markings/moving feature markings 40 in at least two quadrants of the reticle. In still another embodiment, the reticle includes at least two polygonal rangefinder markings/moving feature markings 40 in the upper right quadrant and the upper left quadrants of the reticle.

In an embodiment, the reticle includes at least two polygonal rangefinder markings/moving feature markings 40 positioned above the vertical has markings 34. Preferably, at least one of the two polygonal rangefinder markings/moving feature markings 40 is on one side of the primary vertical cross-hair 20 and the other of the at least two polygonal rangefinder markings/moving feature markings 40 is on the other side of the primary vertical cross-hair 20. However, in a preferred embodiment, a total of at least four polygonal rangefinder markings/moving feature markings 40 are present, with at least two on either side of the primary vertical cross-hair 20.

As set forth above, the rangefinder markings/moving feature markings 40 are polygonal. In the specific embodiment shown in FIGS. 4 and 6, the rangefinder markings/moving feature markings 40 are triangular. However, it will be appreciated that any polygon may be used. Indeed, other non-polygonal shapes or symbols may also be appropriately used as rangefinder/moving feature markings.

In the particular embodiments shown in FIGS. 4 and 6, the polygonal rangefinder markings/moving feature markings 40 are triangular with a point of the triangle pointing towards the primary vertical cross-hair 20. In other embodiments, the triangular rangefinder/moving feature markings may be positioned at a different angle. Moreover, when a polygon or symbol other than a triangle is used, the rangefinder/moving feature markings may not point or accent any particular direction. As further shown in FIGS. 4 and 6, a number corresponding to a range at a given rangefinder marking is positioned to the outer side of the marking relative to the primary vertical cross-hair 22. It will be appreciated, however, that the number corresponding to the range at a given marking may be omitted or communicated with a non-numeric symbol.

Additional markings may be provided on the reticle, including, for example, additional means for determining range, holdover marks, and other markings a user may find beneficial. For example, the reticle shown in FIGS. 3 and 4 includes horizontal rows of dots 42 disposed between secondary horizontal cross-hairs 24. The dots in the horizontal rows of dots 42 are evenly spaced to provide improved additional reference points for enhanced accuracy.

In the embodiment shown in FIGS. 5 and 6, the reticle includes horizontal rows of dots both between the secondary horizontal cross-hairs 26 and immediately below the secondary horizontal cross-hairs 26. As shown in FIG. 6, the dots in the horizontal rows are closer together nearer the primary horizontal cross-hair 22 and spread out as the horizontal rows become further from the primary horizontal cross-hair 22. Moreover, certain of the dots in the horizontal rows of dots occurring immediately below the secondary horizontal cross-hairs 26 are accented, e.g., hollow instead of filled. Following the accented dots vertically diagonally downward creates a plurality of secondary vertical cross-hairs which are used, for example, in targeting a moving obj ect.

A means for determining range may also be provided on the reticle. A rangefinder can be provided in one of the sectors formed by the primary vertical and horizontal cross-hairs and can include a vertical arm and an intersecting horizontal arm. The vertical arm can be provided with a plurality of evenly-spaced horizontal cross-hairs which intersect vertical arm; the horizontal arm can be provided with a plurality of evenly-spaced, preferably downwardly extending cross-hairs. At least some of the range finding cross-hairs are marked to correspond to a scale useful for determining range.

The spacing between the range-finding cross-hairs can be based upon a non-conventional scale, which can be referred to as the "inches of angle" (IOA^{™}) scale. An "inch of angle" is defined as the angle made (or the distance on the reticle) that covers, or subtends, exactly one inch at 100 yards, which is referred to as a "shooter's minute of angle" (SMOA^{™}). A similar scale for metric shooters, which is called a "centimeters of angle" (COA^{™}) scale, can also be used, with a centimeter of angle being the distance on the reticle that covers exactly one centimeter at 100 meters. Conventional scales, such as the "minute of angle" scale (true minute/ angle) or Mil Radian scale (6,283 Mils/circle, 6,400 Mils/ circle, or any other Mils/circle system), can also be used, although they are less intuitive to use and make the accurate estimation of long ranges more difficult.

In one embodiment, the spacings between secondary cross-hairs on the primary vertical and horizontal cross-hairs are also determined with reference to the scale used for the rangefinder. In a further embodiment, the spacings between secondary cross-hairs on the primary vertical and horizontal cross-hairs are independent with reference to the scale used for the rangefinder. In a preferred embodiment, the spacings between secondary cross-hairs on the primary vertical and horizontal cross-hairs are in USMC Mils, and the rangefinder is in IOA^{™}.

The thicknesses of the lines may also be determined with reference to any range-finding scale used. Line thickness may vary with intended use with a variety of thicknesses selected in accord with use. For example, in long-range varmint scopes line thickness may subtend only 0.1" at 100 yards.

In an embodiment, the rangefinder can be positioned at any convenient site in the reticle. It is possible to use the primary vertical cross-hair 20 and/or primary horizontal cross-hair 22 as the rangefinder, obviating the need for additional lines in any sector formed by the intersecting primary vertical and horizontal cross-hairs. This is preferred because it provides a less cluttered, and therefore less distracting, field of view.

In an embodiment, a rangefinder horizontal arm can be superimposed over a portion of the primary horizontal cross-hair 22. The scale on the rangefinder markings can, if desired, be drawn to a different scale from that provided for the line thickness and spacing between the secondary vertical cross-hairs 26 and secondary horizontal cross-hairs 24. For example, an experienced shooter may be provided the rangefinder markings in an inches of angle scale to speed up the process of determining the range to target, and then have the spacing between the secondary horizontal cross-hairs 24 and secondary vertical cross-hairs 26 provided in a more conventional (and hence more familiar) scale that the experienced shooter can use to calibrate and shoot the weapon, such as, for example, a USMC Mil Radian scale.

In one embodiment, only one arm of a rangefinder is superimposed on either the primary vertical cross-hair 20 or the primary horizontal cross-hair 22. For example, the rangefinder vertical arm can be superimposed over the primary vertical cross-hair 20 with a rangefinder horizontal arm extending into an upper quadrant and intersecting the primary vertical cross-hair 20. Likewise, a rangefinder horizontal arm could be superimposed over the primary horizontal cross-hair 22 and a rangefinder vertical arm could intersect the primary horizontal cross-hair 22.

## Claims

1. A reticle (18) comprising:
a) a primary horizontal cross-hair (22);
b) a primary vertical cross-hair (20) that intersects said primary horizontal cross-hair to form an upper right quadrant, an upper left quadrant, a lower left quadrant and a lower right quadrant;
c) two or more vertical hash-marks (34) upon said primary horizontal cross-hair; and
d) at least two triangular markings (40) above said vertical hash-marks in at least the upper right quadrant and the upper left quadrant, wherein said triangular markings are positioned such that a point of each of said triangular markings points to said primary vertical cross-hair.

2. The reticle of Claim 1, further comprising two or more evenly spaced simultaneously visible straight line secondary horizontal cross-hairs (24) on said primary vertical cross-hair below said primary horizontal cross-hair.

3. The reticle of Claim 1 or Claim 2, wherein said primary horizontal cross-hair is a line; and, optionally or preferably, wherein said line is a straight line; and, optionally or preferably, wherein said straight line is a discontinuous straight line.

4. The reticle of Claim 1, Claim 2 or Claim 3, wherein said primary vertical cross-hair is a line; and, optionally or preferably, wherein said line is a straight line; and, optionally or preferably, wherein said straight line is a discontinuous straight line.

5. The reticle of any of Claims 1 to 4, further comprising at least an additional two triangular markings, one of the at least an additional two triangular markings to the left of said primary vertical cross-hair and the other of the at least an additional two triangular markings to the right of said primary vertical cross-hair.

6. The reticle of Claim 1 or of any of Claims 2 to 5, further comprising a numerical marking adjacent each triangular marking.

## Patentansprüche

1. Fadenkreuz (18), umfassend:
a) ein primärer horizontaler Faden (22);
b) ein primärer vertikaler Faden (20), der den primären horizontalen Faden schneidet, um einen oberen rechten Quadranten, einen oberen linken Quadranten, einen unteren linken Quadranten und einen unteren rechten Quadranten zu bilden;
c) zwei oder mehr vertikale Rautezeichen (34) auf dem primären horizontalen Faden; und
d) mindestens zwei dreieckige Markierungen (40) oberhalb der vertikalen Rautezeichen zumindest im oberen rechten Quadranten und im oberen linken Quadranten, wobei die dreieckigen Markierungen so angeordnet sind, dass ein Punkt jeder der dreieckigen Markierungen auf den ersten vertikalen Faden zeigt.

2. Fadenkreuz nach Anspruch 1, weiter umfassend zwei oder mehr gleichmäßig beabstandete, gleichzeitig sichtbare geradlinige sekundäre horizontale Fäden (24) auf dem primären vertikalen Faden unterhalb des primären horizontalen Fadens.

3. Fadenkreuz nach Anspruch 1 oder Anspruch 2, wobei der primäre horizontale Faden eine Linie ist; und, optional oder vorzugsweise, wobei die Linie eine gerade Linie ist; und, optional oder vorzugsweise, wobei die gerade Linie eine diskontinuierliche gerade Linie ist.

4. Fadenkreuz nach Anspruch 1, Anspruch 2 oder Anspruch 3, wobei der primäre vertikale Faden eine Linie ist; und, optional oder vorzugsweise, wobei die Linie eine gerade Linie ist; und, optional oder vorzugsweise, wobei die gerade Linie eine diskontinuierliche gerade Linie ist.

5. Fadenkreuz nach einem der Ansprüche 1 bis 4, weiter umfassend mindestens zwei zusätzliche dreieckige Markierungen, wobei sich eine der mindestens zwei zusätzlichen dreieckigen Markierungen links von dem primären vertikalen Faden und die andere der mindestens zwei zusätzlichen dreieckigen Markierungen rechts von dem primären vertikalen Faden befindet.

6. Fadenkreuz nach Anspruch 1 oder nach einem der Ansprüche 2 bis 5, weiter umfassend eine numerische Markierung neben jeder dreieckigen Markierung.

## Revendications

1. Réticule (18) comprenant :
a) une croisée de réticule (22) horizontale primaire ;
b) une croisée de réticule (20) verticale primaire qui est en intersection avec ladite croisée de réticule horizontale primaire pour former un quadrant droit supérieur, un quadrant gauche supérieur, un quadrant gauche inférieur et un quadrant droit inférieur ;
c) deux ou plusieurs marques de hachage (34) verticales sur ladite croisée de réticule horizontale primaire ; et
d) au moins deux marquages (40) triangulaires par-dessus lesdites marques de hachage verticales dans au moins le quadrant supérieur droit et le quadrant supérieur gauche, dans lequel lesdits marquages triangulaires sont positionnés de sorte qu'un point de chacun desdits marquages triangulaires désigne ladite croisée de réticule verticale primaire.

2. Réticule selon la revendication 1, comprenant en outre deux ou plusieurs croisées de réticule (24) horizontales secondaires à ligne droite visibles simultanément et régulièrement espacées sur ladite croisée de réticule verticale primaire au-dessous de ladite croisée de réticule horizontale primaire.

3. Réticule selon la revendication 1 ou la revendication 2, dans lequel ladite croisée de réticule horizontale primaire est une ligne ; et, facultativement et de préférence, dans lequel ladite ligne est une ligne droite ; et, facultativement ou de préférence, dans lequel ladite ligne est une ligne droite discontinue.

4. Réticule selon la revendication 1, la revendication 2 ou la revendication 3, dans lequel ladite croisée de réticule verticale primaire est une ligne ; et, facultativement ou de préférence, dans lequel ladite ligne est une ligne droite ; et, facultativement ou de préférence, dans lequel ladite ligne droite est une ligne droite discontinue.

5. Réticule selon l'une quelconque des revendications 1 à 4, comprenant en outre au moins deux autres marquages triangulaires supplémentaires, l'un des au moins deux autres marquages triangulaires supplémentaires à gauche de ladite croisée de réticule verticale primaire et l'autre des au moins deux autres marquages triangulaires supplémentaires à droite de ladite croisée de réticule verticale primaire.

6. Réticule selon la revendication 1 ou l'une quelconque des revendications 2 à 5, comprenant en outre un marquage numérique adjacent à chaque marquage triangulaire.
